**Europäisches Patentamt**

**European Patent Office**

**Office européen des brevets**

(19)

(11) Veröffentlichungsnummer: **0 111 164**
**B1**

## (12) EUROPÄISCHE PATENTSCHRIFT

(45) Veröffentlichungstag der Patentschrift:
26.02.86

(21) Anmeldenummer: **83111141.4**

(22) Anmeldetag: **08.11.83**

(51) Int. Cl.⁴: **H 04 Q 7/04**

(54) **Funksystem.**

(30) Priorität: **03.12.82 DE 3244735**
**18.06.83 DE 3321997**

(43) Veröffentlichungstag der Anmeldung:
**20.06.84 Patentblatt 84/25**

(45) Bekanntmachung des Hinweises auf die Patenterteilung:
**26.02.86 Patentblatt 86/9**

(84) Benannte Vertragsstaaten:
**AT BE CH DE FR IT LI NL SE**

(56) Entgegenhaltungen:
**EP - A - 0 040 954**
**EP - A - 0 069 695**
**DE - A - 1 441 130**

**FREQUENZ, Band 36, Nr. 4,5, 1982, Seiten 90-99, Berlin, DE., F. PERNICE: "Das Funkfernsprechnetz C der Deutschen Bundespost"**
**PATENTS ABSTRACTS OF JAPAN, Band 4, Nr. 63, 13. Mai 1980, Seite 109E10**

(73) Patentinhaber: **ANT Nachrichtentechnik GmbH, Gerberstrasse 33, D-7150 Backnang (DE)**

(72) Erfinder: **Koch, Harry, Dipl.-Ing., Burgstrasse 263, D-3006 Burgwedel 3 (DE)**

(74) Vertreter: **Wiechmann, Manfred, Dipl.-Ing., ANT Nachrichtentechnik GmbH Gerberstrasse 33, D-7150 Backnang (DE)**

## Beschreibung

Die Erfindung betrifft ein Funksystem, wie im Oberbegriff des Patentanspruches 1 angegeben.

Ein solches System ist bekannt aus der DE-A-1 441 130.

Bei ihm wird für mehrere einander benachbarte Sendegebiete (z.B. Funkzonen) dieselbe Sendefrequenz benutzt, jedoch zu unterschiedlichen Zeiten, nämlich in unterschiedlichen sogenannten Zeitschlitzen.

Von einem solchen System mit Zeitschlitzen geht die Erfindung aus, wobei sie sowohl für den Organisationskanal eines Funkfernsprechnetzes geeignet ist als auch für eine landesweite Personenruf-Funkanlage. Es wird aber im folgenden die für Personenruf-Funkanlagen für landesweite Rufnetze gebräuchliche Ausdrucksweise benutzt, wobei anfangs jeweils in Klammern die für ein Funkfernsprechnetz üblichen Bezeichnungen angegeben sind.

Eine solche Personenruf-Funkanlage gestattet es einem rufenden Fernsprechteilnehmer, in einzelnen Rufregionen (Funkverkehrsbereichen) oder auch landesweit das Absetzen von Funkrufen mit maximal zehn oder zwölf (bei Anwahl aus dem Ausland bis 15 Ziffern) Ziffern Information zu veranlassen, die in einem Rufempfänger in einer optischen Anzeige sichtbar gemacht und gespeichert werden. Dazu muß durch das Wählen einer Nummer, einem sogenannten Codewort, ein Rufauftrag über das Fernsprechnetz an eine Funkrufzentrale (Überleiteinrichtung) erteilt werden, die den Rufauftrag in einen Funkruf umsetzt. Auch die Übertragung einer zeitlich begrenzten Sprachmitteilung ist möglich. Eine solche Anlage kann ohne nennenswerte Eingriffe in die bestehende Fernsprechtechnik in das flächendeckende öffentliche Fernsprechnetz integriert werden und ist von jedem Fernsprechanschluß aus nutzbar. Es besteht die Möglichkeit, auf dem Funkweg einem nicht in der Nähe eines Telefons befindlichen Rufempfänger-Teilnehmer als Information eine Rückrufnummer zu übermitteln. Der Rückruf kann dann von einem beliebigen Telefon im Fernsprechnetz aus erfolgen.

Bei Installation einer solchen Anlage beispielsweise in der Bundesrepublik Deutschland wäre diese in Rufregionen aufzuteilen, die der rufende Fernsprech-Teilnehmer durch die Wahl einer Codeziffer einzeln oder alle gemeinsam (landesweit) erreichen kann. Es ergeben sich dabei drei verschiedene Rufebenen mit unterschiedlichem Verkehrsaufkommen, wobei eine Rufregion beispielsweise die Ausdehnung einer Zentral-Vermittlungsstelle haben kann:

Erste Rufebene:.

Verkehr nur innerhalb einer Rufregion, d.h., der rufende Fernsprech-Teilnehmer und der gerufene Rufempfänger-Teilnehmer befinden sich in derselben Rufregion. Diese wird in diesem Fall Heimatregion genannt. Es wird damit gerechnet, daß sich ca. 80 % des Gesamtverkehrsaufkommens innerhalb von Heimatregionen abspielt.

Zweite Rufebene: .

Die beinhaltet das Verkehrsaufkommen von Funkrufen, die durch einen Fernsprech-Teilnehmer in einer Rufregion ausgelöst werden und von einem Rufempfänger-Teilnehmer in einer anderen Rufregion empfangen werden, also sozusagen den regionüberschreitenden Verkehr. Hierbei wird mit einem Verkehrsaufkommen von ca. 15 % des gesamten Verkehrsaufkommens gerechnet.

Dritte Rufebene:

Die betrifft Funkrufe, die landesweit ausgestrahlt werden sollen. Hier wird mit einem Verkehrsaufkommen von ca. 5 % gerechnet.

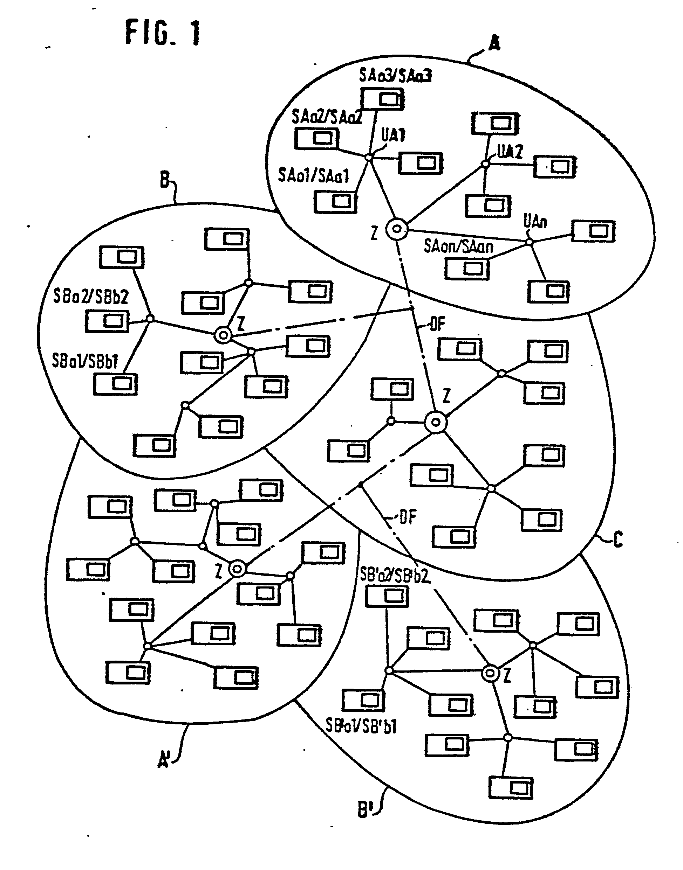

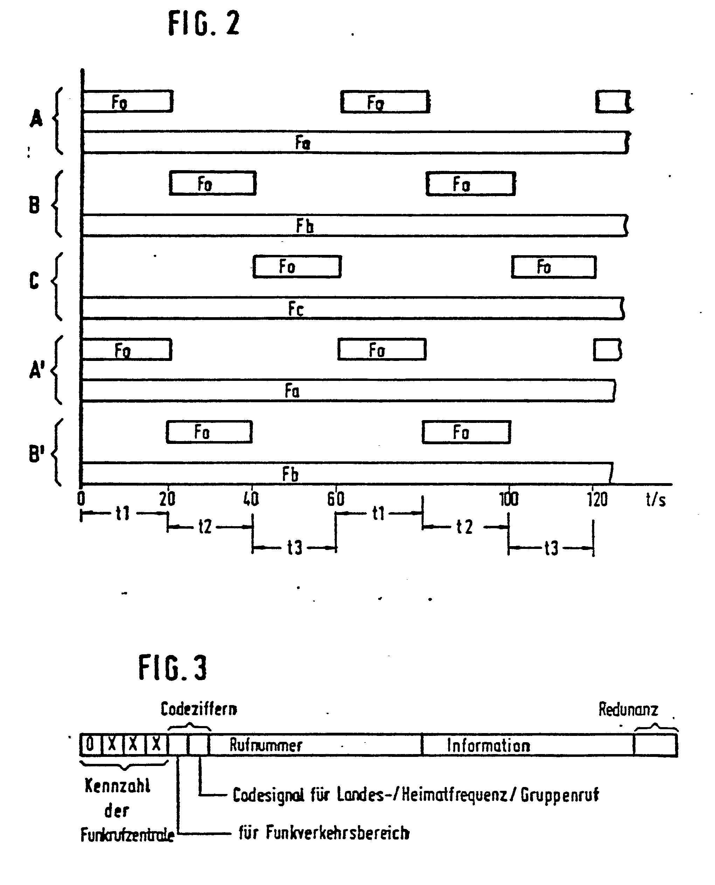

Wird nun, wie in Fig. 1 dargestellt, für drei einander benachbarte Rufregionen A, 5, C zur Aussendung von Funkrufen dieselbe Sendefrequenz, aber in einem Zeitschlitzverfahren verwendet, so werden auf dieser Frequenz beispielsweise innerhalb einer Minute in dem ersten zwanzig Sekunden (erster Zeitschlitz) Funkrufe mur innerhalb der Rufregion A, innerhalb der nächsten 20 Sekunden nur innerhalb der Rufregion B und innerhalb der letzten 20 Sekunden nur innerhalb der Rufregion C usw. ausgesendet. In Rufregionen A', B' usw. kann dieselbe Sendefrequenz verwendet werden, wenn dafür gesorgt ist, daß in einander benachbarten Rufregionen unterschiedliche Zeitschlitze benutzt werden. In Fig. 2 ist dies für die später noch anders zu bezeichnende Sendefrequenz Fo dargestellt, und zwar in Abhängigkeit vom der Zeit t in Sekunden. Man sieht, daß diese Sendefrequenz innerhalb der ersten 20 Sekunden in den Rufregionen A und A', innerhalb der zweiten zwanzig Sekunden in den Rufregionen B und B' und weiter ausgesendet wird, so daß es an dem Grenzen zwischen einander benachbarten Rufregionen nicht zu störenden Interferenzen kommen kann.

Nachteilig bei einer solchen Verfahrensweise ist, daß für jede Rufregion nur relativ kurze Zeitschlitze zur Verfügung stehen. Diese Beschränkung der Sendezeit wird umso mehr als störend empfunden, als sie aus der Forderung resultiert, daß die Aussendungen in einander benachbarten Rufregionen sich nicht gegenseitig stören, wobei doch aber eigentlich diese Rücksichtnahme einer Rufregion auf die benachbarten widersinnig erscheint, wenn man bedenkt, daß entsprechend der oben angegebenem ersten Rufebene 80 % des Gesamtverkehrsaufkommens ohnehin nur innerhalb von Heimatregionen gegeben ist. Dieses Verkehrsaufkommen innerhalb ein- und derselben Rufregion wird als Heimatverkehrsaufkommen bezeichnet. Aus der Sicht einer Rufregion heraus, die vielleicht gerade ein starkes Heimatverkehrsaufkommen hat, während das Verkehrsaufkommen in dem Nachbarrufregionen womöglich gerade gering ist, wäre es angemessener, wenn dieser Heimatregion ein vergrößerter Zeitschlitz zur Verfügung gestellt würde. Solch eine Verfahrensweise wird auch tatsächlich in Großbritannien benutzt, wo Großstädten ein längerer Zeitschlitz zur Verfügung steht, als Landgebieten, wo das Verkehrsaufkommen geringer ist EP-A-00 40 954, Dieses Verfahren läßt sich aber auf andere Länder oft nicht übertragen, wenn sich beispielsweise sowohl in der Rufregion A, als auch in den Rufregionen B und C Großstädte mit hohem Verkehrsaufkommen befinden.

Zur Umgehung dieser Schwierigkeiten ist in der DE-C2-26 59 570 ein Fernsprech- und Datennetz beschrieben, bei dem zur Entkopplung einander überlappender Rufregionen unterschiedliche Sendefrequenzen benutzt sind; mit Rücksicht auf ein starkes Heimatverkehrsaufkommen in einem Bereich hoher Teilnehmerdichte ist diesem (mehreren Rufregionen überlagerten) Bereich eine eigene Heimatfrequenz zugeordnet; diese ist sozusagen den unterschiedlichen Sendefrequenzen der Rufregionen des Bereiches als zusätzliche Sendefrequenz überlagert. Nachteilig ist dabei wiederum, daß Empfänger, die auf den unterschiedlichen Sendefrequenzen der Rufregionen arbeiten, bei einem überwechseln in eine andere Rufregion umgeschaltet werden müssen, und zwar entweder von Hand (was oft vergessen wird) oder automatisch (was hohen technischen Aufwand erfordert).

Die Aufgabe der Erfindung besteht darin, einerseits eine unangemessen große Beschränkung von Sendezeit innerhalb einer Rufregion infolge der Zuteilung von Zeitschlitzen zu vermeiden, andererseits aber auch die Schwierigkeiten zu umgehen, die beim Wechsel eines Rufempfängers von einer Rufregion in eine andere auftreten würden, wenn anstatt einer Sendefrequenz mit Zeitschlitzen mehrere Sendefrequenzen verwendet würden.

Diese Aufgabe wird gelöst durch das Funksystem mit den Merkmalen des Patentanspruches 1. Vorteilhafte Weiterbildungen sind in den Unteransprüchen angegeben. Die zugrundeliegenden Überlegungen sind folgende.:

Bei einer Personenruf-Funkanlage für landesweiten Ruf oder bei einem Funkfernsprechnetz, bei denen eine Entkopplung einander benachbarter Rufregionen durch Zuteilung unterschiedlicher Zeitschlitze erreicht ist, kann zur Verlängerung der innerhalb einer Rufregion zur Verfügung stehenden Sendezeit über die Dauer eines Zeitschlitzes hinaus berücksichtigt werden, daß die ständige Erreichbarkeit eines hohen Prozentsatzes der innerhalb einer Rufregion empfangenden Empfänger durch Zuteilung einer weiteren Sendefrequenz (Heimatfrequenz) nicht beeinträchtigt wird, weil diese Empfänger ohnehin nur ständig innerhalb derselben Region benutzt werden, so daß Schwierigkeiten beim übergang in eine andere Rufregion mit einer anderen Heimatfrequenz nicht entstehen können. Für diese Kategorie von Empfängern kann daher eine Heimatfrequenz zur Verfügung gestellt werden, die sowohl innerhalb als auch ausserhalb des für diese Rufregion vorgesehenen Zeitschlitzes ausgesendet werden darf, wobei zur Entkopplung einander benachbarter Rufregionen in diesen jeweils unterschiedliche Heimatfrequenzen vorzusehen sind. Diese unterschiedlichen Heimatfrequenzen stören den Betriebsablauf nicht, weil die ihnen zugeordneten Empfänger ihre jeweilige Heimatregion ohnehin nicht verlassen.

Zusätzlich kann die verbleibende Beschränkung der Sendezeit, die beim zyklischen Weiterschalten eines Zeitschlitzes eines Zeitschlitzsystems über mehrere einander benachbarter Rufregionen auftritt, dadurch umgangen, daß mehrere Zeitschlitzsysteme vorgesehen sind; diese Zeitschlitzsysteme sind aus der Sicht einer Rufregion zeitlich gegeneinander versetzt und können einen Zyklus vollständig ausfüllen; dabei sind den verschiedenen Zeitschlitzsystemen unterschiedliche Sendefrequenzen zugeordnet. Es belegt also einer der normalerweise in einem Zeitschlitz übertragen en Datenblöcke innerhalb eines Zyklus einen bestimmten Sendefrequenzkanal, während ein anderer Datenblock einen anderen Sendefrequenzkanal belegt; dabei wird derselbe Datenblock innerhalb des Zyklus nacheinander so oft in mehreren einander überschneidenden Sendegebieten (z.B. Rufregionen) abgestrahlt, wie der Zyklus Zeitschlitze enthält, und jeglicher Datenblock wird für irgendeinen bestimmten Zeitpunkt immer nur in einem der Sendegebiete abgestrahlt.

Anhand der Zeichnungen werden bevorzugte Ausführungsbeispiele der Erfindung erläutert. Es zeigen:

Fig. 1: als Landkarte aufzufassen verschiedene Rufregionen,

Fig. 2: die gegenseitige Zuordnung von Rufregionen, der Zeit und der verschiedenen Sendefrequenzen, für ein erstes Ausführungsbeispiel,

Fig. 3: einen Teil eines Funktelegramms in schematischer Darstellung, der Bestandteil eines Funkrufes ist,

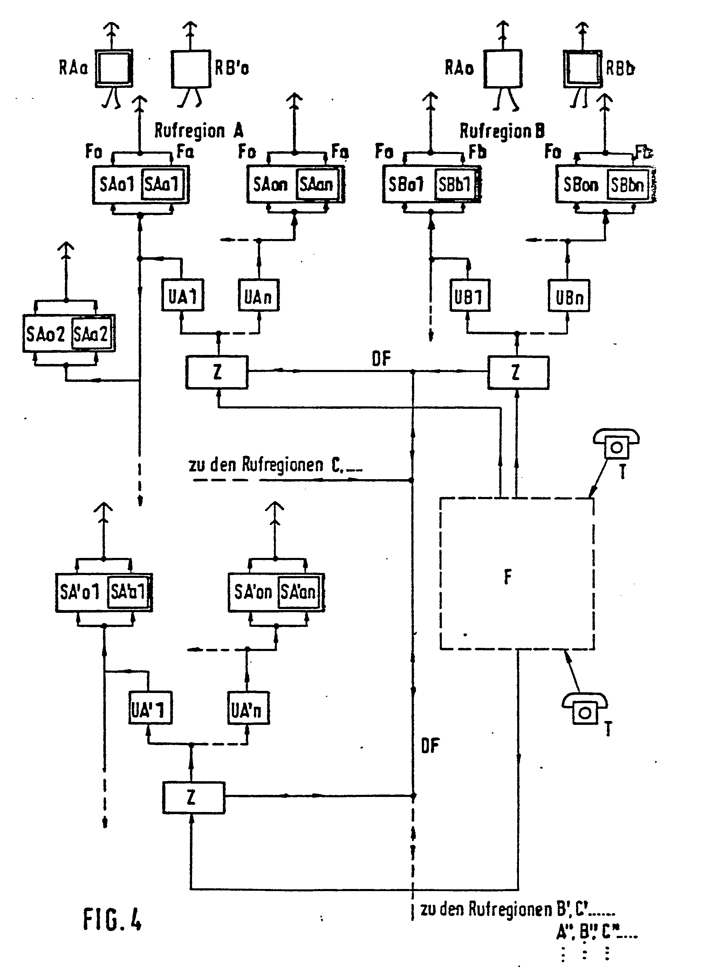

Fig. 4: ein Blockschaltbild,

Fig. 5: einen Ausschnitt aus der Netzstruktur des Funksystems nach Fig. 1,

Fig. 6: einen Frequenz- und Zeitschlitzplan für ein zweites Ausführungsbeispiel,

Fig. 7: einen Ausschnitt aus einem Blockschaltbild für das zweite Ausführungsbeispiel,

Fig. 8: einen der Zyklen, in welchen bei beiden Ausführungsbeispielen gesendet wird,

Fig. 9: die übertragungsfunktion in Leistungseinheiten in Abhängigkeit von der Frequenz für die Sendeverstärker der Sender des zweiten Ausführungsbeispiels.

In Fig. 1 befindet sich in jeder Rufregion A, B, C, A', B' eine Funkrufzentrale Z (überleiteinrichtung). Die verschiedenen Funkrufzentralen sind durch Datenfernübertragungsleitungen DF miteinander verbunden. An ihrer Stelle kann aber auch ein Teil des öffentlichen Fernsprechnetzes treten. Die Funkrufzentralen Z dienen als Eingangspforten für Rufaufträge, die aus dem öffentlichen Fernsprechnetz kommen. Von jeder Funkrufzentrale Z werden über die betreffende Rufregion, beispielsweise A, verteilte Unterzentralen UA1, UA2, ..., UAn versorgt, von denen wiederum jeweils mindestens ein Doppelsender versorgt wird, nämlich SAo1/SAa1, SAo2/SAa2, ..., SAon/SAan. Diese Bezeichnungen gelten für das erste Ausführungsbeispiel mit den Merkmalen des Patentanspruches 1; hierbei steht S für Sender, A für die Rufregion A, o für die von diesem Sender als Sendefrequenz ausgesendete Landesfrequenz Fo, a für die von dem betreffenden Sender ausgesendete Heimatfrequenz Fa und die Ziffern 1, 2, 3 ... n für die Nummer des Senders innerhalb einer Rufregion. Dementsprechend ist beispielsweise der Doppelsender SB'o2/SB'b2 in der Rufregion B' als zweiter Doppelsender aufgestellt, und er besteht aus zwei Sendern, nämlich einem Landessender SB'o2, der auf der Landesfreqeunz Fo arbeitet, und aus einem Heimatsender SB'b2, der auf der Heimatfrequenz Fb arbeitet.

Für das erste Ausführungsbeispiel zeigt Fig. 2 in Abhängigkeit von der Zeit t zu welchen Zeitpunkten die Landesfrequenz Fo und die Heimatfrequenzem Fa, Fb und Fc ausgesendet werden dürfen. Demnach darf die Landesfrequenz innerhalb der verschiedenen Rufregionen nur jeweils innerhalb vorgegebener Zeitschlitze t1, t2, t3 ausgesendet werden, während für die Heimatfrequenzen keine zeitliche Beschränkung besteht.

Es ist also eine Entkopplung einander benachbarter Rufregionen A, B, C durch Zuteilung unterschiedlicher Zeitschlitze t1, t2, t3 für eine den Rufregionen gemeinsame, drahtlos gesendete und Rufe übermittelnde Sendefrequenz (Landes- oder Zeitschlitzfrequenz Fo) vorgesehen. Eine Verlängerung der innerhalb einer Region zur Verfügung stehenden Sendezeit über die Dauer eines Zeitschlitzes hinaus wird dadurch erreicht, daß zwar eine weitere Sendefrequenz, die sogenannte Heimatfrequenz Fa, zur Verfügung gestellt wird, die aber auch außerhalb des für die betreffende Region A vorgesehenen Zeitschlitzes t1 ausgesendet werden darf; die Entkopplung einander benachbarter Rufregionen A, B, C wird dabei durch unterschiedliche Heimatfrequenzen Fa, Fb, Fc erreicht. Außerdem werden die Heimatfrequenzen nur solchen Empfängern zur Verfügung gestellt, die ohnehin nur ständig innerhalb derselben Region A benutzt werden.

Um einem gerufenen Rufempfänger-Teilnehmer nach Erhalt eines Funkrufes, den ein Fernsprech-Teilnehmer ausgelöst hat, einen Rückruf zu ermöglichen, ist es erforderlich, die Ortsnetzkennzahl, die der Rufempfänger-Teilnehmer bei seinem telefonischen Rückruf wählen soll, mit an den Rufempfänger-Teilnehmer zu übertragen. Außer der Ortsnetzkennzahl muß auch die restliche Telefonnummer des vom Rufempfänger-Teilnehmer Anzurufenden übertragen werden. Die gesamte Rufnummer wird im folgenden als Information bezeichnet. Die Informationskapazität muß für mindestens zehn (bei Anruf aus dem Ausland fünfzehn) Ziffern ausreichen; dabei wird vorausgesetzt, daß auf die Angabe der Null der Ortsnetzkennzahl verzichtet werden kann. Die Gesamtheit der vom Fernsprech-Teilnehmer als Rufauftrag zu wählenden Nummern (beginnend mit der Rufnummer des zu rufenden Rufempfänger-Teilnehmers) wird im folgenden als Ruftelegramm bezeichnet, das aber in der Praxis am Anfang noch durch eine Präambel und am Ende durch Redundanzsignale zur Codesicherung ergänzt wird.

Ein solches Ruftelegramm beginnt, wie in Figur 3 dargestellt, mit vier Ziffern, nämlich der Kennzahl der Funkrufzentrale (Überleiteinrichtung), dann folgen zwei sogenannte Codeziffern, danach folgen sechs Ziffern, nämlich die Nummer des zu rufenden Rufempfänger-Teilnehmers (Funkrufadresse) und schließlich weitere zehn Ziffern (Information), nämlich die Telefonnummer des vom Rufempfänger-Teilnehmer anzurufenden Fernsprech-Teilnehmers, die auf dem Display des Empfängers des Rufempfänger-Teilnehmers angezeigt werden.

Mit der Wahl der beiden Codeziffern, die auch bei bisherigen Personenruf-Funkanlagen für landesweite Rufnetze schon vorgesehen waren, kann folgendes erreicht werden: Mit der ersten Codeziffer kann der rufende Fernsprech-Teilnehmer der Funkrufzentrale (Überleiteinrichtung) mitteilen, in welcher Rufregion (Funkverkehrsbereich) (maximal 9) gerufen werden soll. Bei landesweitem Funkruf (Codeziffer 0) wird die angewählte Funkrufzentrale über eine Datenverbindung (z.B. Standleitung "Datex-Netz") den Ruf an alle anderen angeschlossenen Funkrufzentralen weiterleiten. Wird die Codeziffer 1 gewählt, wenn nämlich bekannt ist, daß der zu rufende Rufempfänger-Teilnehmer sich in der Rufregion A aufhält, so wird die Funkrufzentrale in der Rufregion A angewählt. Bei Wahl der Codeziffer 2 wird die Funkrufregion B angewählt usw..

Die zweite Codeziffer bestimmt bei der bekannten Personenruf-Funkanlage für landesweite Rufnetze die Rufart. Insgesamt besteht die Möglichkeit von zehn Rufarten, die auch mit unterschiedlichen Gebühren belegt werden können (auch für einen Rufauftrag für unterschiedlich weit entfernte Rufregionen können unterschiedliche Gebühren erhoben werden). Als Rufarten kommen in Frage: Gruppenruf, Sprachdurchsage, dringender Ruf usw..

Neu ist nun, daß mit Hilfe der zweiten Codeziffer auch bestimmt werden kann, ob der Funkruf über einen Landessender oder einen Heimatsender, d.h., über die auf Zeitschlitze beschränkte Landesfrequenz Fo oder über die der betreffenden Rufregion zugeordnete Heimatfrequenz Fa erfolgen soll. Dabei muß dem rufenden Fernsprech-Teilnehmer bekannt sein, welcher von zwei Typen von Empfängern beim Rufempfänger-Teilnehmer vorhanden ist, nämlich entweder ein Empfänger, der auf der Landesfrequenz, oder einer, der auf der Heimatfrequenz arbeitet. Dabei sind Empfänger, die nur auf der Heimatfrequenz arbeiten, für Rufempfänger-Teilnehmer vorgesehen, die stets nur in derselben Rufregion erreichbar sein wollen und auf die Erreichbarkeit in anderen Rufregionen verzichten.

Wenn bei dem ersten Ausführungsbeispiel auch Rufarten wie Gruppenruf, vorrangiger Ruf, Sprachdurchsage usw. möglich bleiben sollen, müssen für jede dieser Rufarten zwei Codeziffern zur Auswahl stehen, nämlich eine für einen Funkruf auf der Landesfrequenz und eine weitere für einen Funkruf auf der Heimatfrequenz der betreffenden Rufregion.

Mit den Bezeichnungen der vorangegangenen Figuren ist in Fig. V ein Blockschaltbild des ersten Ausführungsbeispiels eines Funksystems wiedergegeben. Von Telefonen T sind über das öffentliche Fernsprechnetz F Funkrufzentralen Z erreichbar, die untereinander durch Datenfernübertragungsleitungen DF verbunden sind. Von den Funkrufzentralen Z werden Unterzentralen UA1, ..., UAn in der Rufregion A bzw. UB1, ..., UBn in der Rufregion B usw. gesteuert, die wiederum Doppelsender zur Aussendung von Funkrufen steuern. Die Funkrufe werden empfangen von Empfängern RAa (in der Rufregion A, auf der Heimatfrequenz a arbeitend), RB'o (aus der Rufregion B' in die Rufregion A gekommen und auf der Landesfrequenz Fo arbeitend), RAo (aus der Rufregion A im die Rufregion B gekommen und auf der Landesfrequenz Fo arbeitend), RBb (in seiner Heimatregion B geblieben und auf der zugehörigen Heimatfrequenz Fb arbeitend). Die Empfänger RB'o und RAo werden entweder durch einen gezielten Funkruf mit der ersten Codeziffer 1 (für die Rufregion A) bzw. mit der ersten Codeziffer 2 (für die Rufregion B) von den synchron und simultan arbeitenden Sendern (SAo1, ..., SAon) innerhalb der Rufregion A bzw. von den entsprechenden Sendern SBo1, ..., SBon der Rufregion B erreicht oder - wenn nicht bekannt ist, in welcher Rufregion sich die Empfänger zur Zeit befinden - werden sie erreicht infolge Wahl der ersten Codeziffer 0 aufgrund eines landesweiten Funkrufes durch irgendeinen von allen in dem jeweils zulässigen Zeitschlitz sendenden Sendern Sxoy, wobei x für A, B, C, A',... und y für 1, 2, ..., n steht.

Die Empfänger RAa und RBa dagegen sind nur innerhalb ihrer Heimatregion und nur über die Sender SAa1, ..., SAan bzw. SBb1, ..., SBbn auf ihrer jeweiligen Heimatfrequenz Fa bzw. Fb erreichbar.

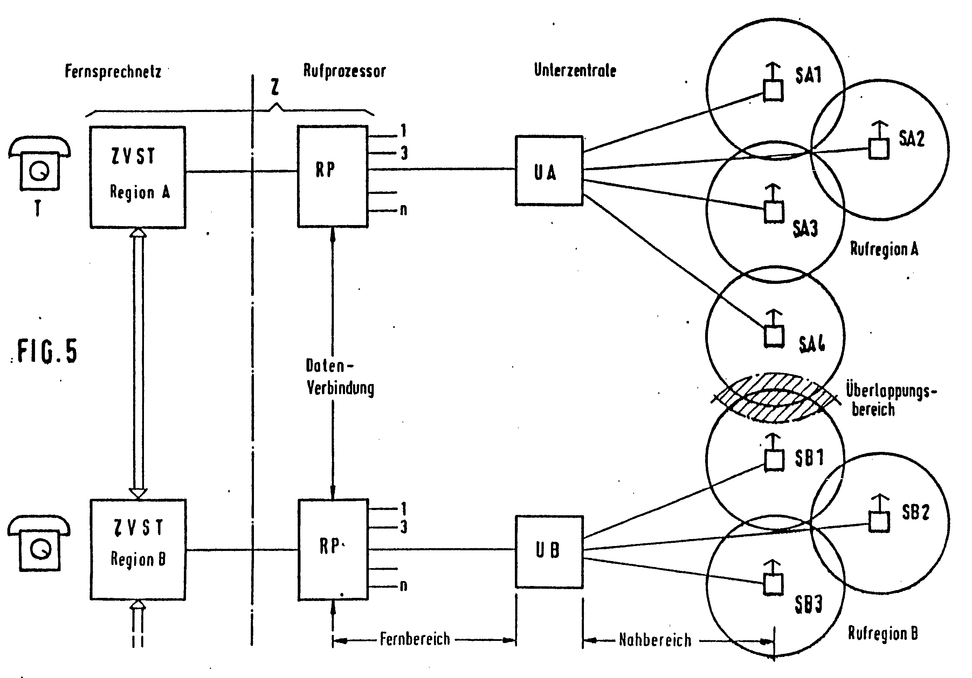

Die in Fig. 5 dargestellte Netzstruktur ist ein Ausschnitt aus Fig. 1 für den Überlappungsbereich zwischen den Rufregionen A und B. Da diese Struktur aber auch für die Beschreibung des zweiten Ausführungsbeispieles dienen soll, sind die Bezeichnungen etwas allgemeiner als in Fig. 1 gewählt worden. Von einem Telefon T aus ist das Fernsprechnetz und damit insbesondere die Zentralvermittlungsstelle ZVST, beispielsweise der Rufregion A, erreichbar. Dieser ist ein Rufprozessor RP zugeordnet. Beides bildet zusammen eine Rufzentrale Z. Mehrere Rufprozessoren sind untereinander über Daten-Verbindungen verbunden. Und haben jeweils für ihre Rufregion die Vermittlung vom Fernsprechnetz zu übernehmen. Jeder Rufprozessor RP verteilt zu Datenblöcken zusammengefasste Ruftelegramme über ein festes Leitungsnetz mit dazwischengeschalteten Unterzentralen UA an die einzelnen Sender SA1, SA2, ... der Rufregion A bzw. SB1, SB2, ... der Rufregion B usw..

Zweckmäßigerweise werden Sendefrequenzen im VHF- oder UHF-Bereich verwendet. Mit Rücksicht auf die dadurch gegebene geringe Reichweite der Sender von in der Regel weniger als 30 Kilometern sind mehrere Sender im Bereich einer Rufregion synchron und simultan im Gleichwellenfunkbetrieb oder im quasisynchronen Gleichwellenfunkbetrieb zu betreiben, wobei sich die jeweiligen Funkversorgungsgebiete geographisch überlappen sollen, um eine lückenlose Funkversorgung zu erreichen. Außer der hochfrequenten Stabilität der Senderoszillatoren werden Modulatoren mit hoher Hubkonstanz benötigt. Damit in Überlappungsbereichen zwischen Funkversorgumgsgebieten von Sendern innerhalb einer Region das Empfangssignal phasengleich demoduliert werden kann, müssen die Sender mit gleicher Phasen moduliert werden, was einen Laufzeitausgleich für die Modulationszubringer erfordert. Bei größeren landesweiten Funksystemen können als Modulationszubringer wegen der größeren Entfernungen nicht mehr Niederfrequenzkabel oder pupinisierte Leitungen verwendet werden, sondern es kommen Übertragungswege mit Trägerfrequenzabschnitten und auch Pulscodemodulationssysteme zum Einsatz. Ein Laufzeitausgleich für die auf den Modulationszubringern Übertragenen Ruftelegramme ist bei diesen Systemen aber nur sehr schwer durchzuführen. Es wird daher angestrebt, Gleichwellenfunsysteme möglichst nur innerhalb einer Rufregion anzuwenden, wo man mit Niederfrequenzkabeln oder Pupinleitungen noch den gewünschten Entfernungsbereich überbrücken kann.

Das zweite Ausführungsbeispiel wird nun anhand der Figuren 1, 5 und 8 erläutert. Zur Vereinfachung der Erläuterung wird zunächst der Begriff "Zyklusgebiet" eingeführt. Dabei handelt es sich um das Gebiet, das innerhalb eines Funksystems eine Gruppe von einander unmittelbar benachbarten Rufregionen, die sich gegenseitig überlappen, umfaßt. In Fig. 1 überlappen sich beispielsweise die Rufregionen A, B und C gegenseitig. Bekannt ist es zur Vermeidung von Interferenzstörungen, in den Überlappungsbereichen zum einen, unterschiedliche Sendefrequenzkanäle für die Rufregionen und zum anderen einen gemeinsamen Sendefrequenzkanal vorzusehen, der jedoch jeweils in einem in Zeitschlitze unterteilten Zyklus mehrfach nacheinander mit dem selben Ruftelegramm oder Datenblock belegt wird, wobei von den Zeitschlitzen jeder nur einer Rufregion zugeordnet ist.

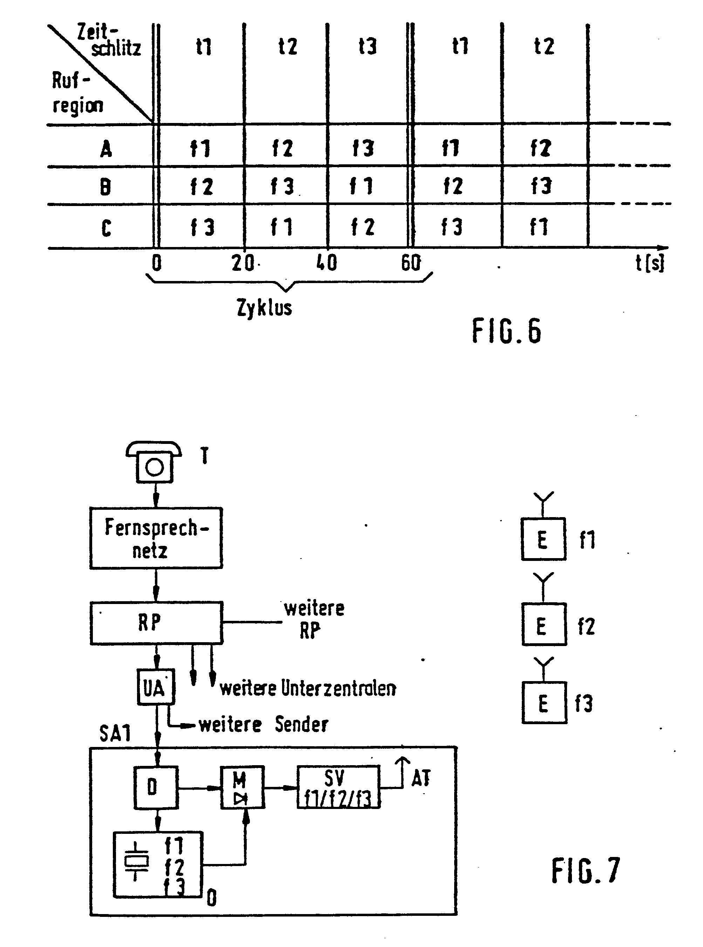

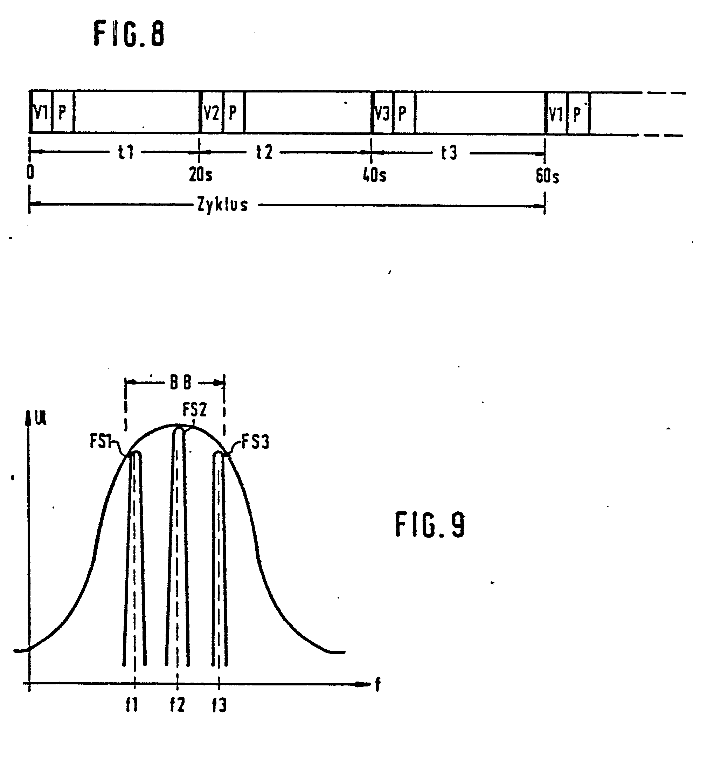

Bei dem zweiten Ausführungsbeispiel der vorliegenden Erfindung werden nun zusätzliche Maßnahmen ergriffen, wie in Fig. 6 dargestellt. Es sind nämlich zusätzlich zu Heimatfrequenzen (die in Fig. 6 nicht erwähnt sind) unterschiedliche Sendefrequenzkanäle mit Landesfrequenzen f1, f2, f3 vorgesehen, die aber zugleich als den Rufregionen A, B, C gemeinsame Sendefrequenzkanäle genutzt sind, indem für die Dauer eines Zyklus in jedem Sendefrequenzkanal ein anderes der Ruftelegramme bzw. Datenblöcke mehrfach nacheinander ausgesendet wird, aber von Zeitschlitz zu Zeitschlitz in einer anderen Rufregion entsprechend der jedem Sendefrequenzkanal eigenen gegenseitigen Zuordnung von Zeitschlitzen zu Funkbereichen. In Fig. 8 sind die Zeitschlitze mit t1, t2, t3 bezeichnet und ihrer Anzahl innerhalb eines Zyklus richtet sich nach der Anzahl der Rufregionen A, B, C, die in einem oben definierten Zyklusgebiet vorhanden sind. In Fig. 1 sind es drei Rufregionen, die sich gegenseitig überlappen. Es könnten aber auch mehr sein. Entsprechend der größten Anzahl von sich gegenseitig überlappenden Funkregionen in einem Funksystem wäre dann eine grössere Anzahl von Zeitschlitzen für einen Zyklus zu wählen.

In dem hier beschriebenen Funksystem gibt es außer Empfängern, die jeweils nur auf einer Heimatfrequenz arbeiten drei Empfängertypen. Ein Typ arbeitet auf der Sendefrequenz f1, der zweite auf f2 und der dritte auf f3. Sie können alle in jeder Rufregion erreicht werden, weil in jeder Rufregion auf allen drei Sendefrequenzen nacheinander dieselben Funkrufe ausgesendet werden. Deshalb entstehen auch keine Schwierigkeiten beim Überwechseln eines Empfängers von einer Rufregion in eine andere. Trotzdem können die Empfänger Einkanalgeräte sein und fest auf eine Sendefrequenz abgestimmt sein. Dies ist eine besonders wirtschaftliche Lösung. Damit auch auf der Senderseite die Wirtschaftlichkeit gegeben ist, sollten die Sender so ausgelegt sein, daß jeder Sender auf den drei verschiedenen Sendefrequenzen arbeiten kann so daß ein und derselbe Sender im Zeitschlitzverfahren von Sendefrequenz zu Sendefrequenz lediglich umgeschaltet zu werden braucht.

Die Umschaltung der Sendefrequenz wird bevorzugt mit Hilfe eines codierten Einschaltsignals vorgenommen.

Das Blockschaltbild der Fig. 7 entspricht teilweise der Fig. 5. In dem Rufprozessor RP werden die ankommenden Ruftelegramme zu Datenblöcken aufbereitet, die über Modulationszubringer und die Unterzentrale UA einem Sender SA1 zugeleitet werden und die für alle Sender im prinzipiellen Aufbau gleichartig sind. Die Datenblöcke füllen jeweils einen Zeitschlitz t1, t2, t3.aus und enthalten, wie in Fig. 8 gezeigt, eine Präambel für die Zeitschlitzsynchronisation im Empfänger E und nachfolgende Ruftelegramme, wie in Fig. 3 dargestellt. Vor jeder Präambel befindet sich als Vorlauf V1, V2 bzw. V3 ein codiertes Einschaltsignal zur Umschaltung der Sendefrequenz in den Sendern. Jeder Sender hat einen Adressdecoder D mit Frequenzerkennung, so daß die in einem Zyklus jeweils auszusendende Sendefrequenz eingeschaltet werden kann; dazu steuert der Adressdecoder D einen Quarzoszillator O oder einen Synthesizer. Die vom Quarzoszillator O gelieferte Sendefrequenz wird in einem Modulator M mit der Präambel und den nachfolgenden Ruftelegrammen moduliert, und die modulierte Sendesschwingung wird einem Sendeverstärker SV und schließlich einer Antenne AT zugeführt.

Der breitbandige Sendeverstärker SV hat eine Schaltbandbreite (Leistungsbandbreite), welche die Sendekanäle der zyklisch von einem Sender auszusendenden Sendefrequenzen f1, f2, f3 umfaßt, so daß nur jeweils ein Sender und eine gemeinsame Zubringerleitung von der Unterzentrale erforderlich ist. Fig. 9 weist auf die Breitbandigkeit des Sendeverstärkers hin. Es ist dort über der Frequenz f die Übertragungsfunktion UL in Leistungseinheiten aufgetragen. Es ist ersichtlich, daß die Frequenzspektren FS1, FS2, FS3 der Sendekanäle, die zu den Sendefrequenzen f1, f2, f3 gehören, innerhalb der Leistungsbandbreite BB liegen.

In der Praxis arbeiten die Sender im Dauerbetrieb abwechselnd auf den drei verschiedenen Sendefrequenzen, wobei die Umschaltzeitpunkte zwischen den Zeitschlitzen zentral von den Rufprozessoren für alle angeschlossenen Sender aller Regionen synchron gesteuert werden.

Dieses Funksystem ist flexibel auf mehr oder weniger große Gebiete anwendbar, weil die Größe einer Rufregion variiert werden kann, indem dort entweder lediglich ein Sender oder mehrere synchronisierte Gleichwellen- oder Quasigleichwellensender aufgestellt werden, wobei diese Sender über eine Unterzentrale von einem Rufprozessor aus zentral gesteuert werden. Mehrere Rufprozessoren können wiederum über Datenleitungen miteinander verbunden sein und damit einen gemeinsamen Zeittakt für die synchron umlaufenden Zeitschlitze eines landesweiten Funkrufsystems erhalten. Damit ist ein zeitsynchrones Umschalten der Sendefrequenzen bei allen Sendern möglich.

**Patentansprüche**

1. Funksystem, welches ein öffentliches Fernsprechnetz erweitert durch mobile Empfänger (RAa, RB'o) und durch Funkrufzentralen (Z), die jeweils für eine Rufregion (A) vorgesehen sind, wobei mit Hilfe einer Funkrufzentrale Rufaufträge, die mittelbar oder unmittelbar aus einem Fernsprechnetz (F) kommen, als Ruftelegramme Fig. 3 in ein Funknetz überleitbar sind, um dort die Aussendung eines Funkrufes auszulösen, und wobei für mehrere einander unmittelbar benachbarte und überlappende Sendegebiete dieselbe Sendefrequenz, genannt Landesfrequenz (Fo), für die Aussendung von Funkrufen benutzt ist, jedoch eine Entkopplung in den gegenseitigen Überlappungsbereichen der Sendegebiete dadurch vorgesehen ist, daß für die Aussendung dieser Landesfrequenz unterschiedliche, zyklisch wiederkehrende Zeitschlitze (t1) in den einzel nen Sendegebieten vorgesehen sind, und wobei ferner zu den unterschiedlichen, jeweils in einem Sendegebiet aussendbaren Sendefrequenzen (Fo, Fa; f1 f2, f3) Sendefrequenzkanäle gehören, die mit Funkrufen belegbar sind, und zwar jeweils mindestens einer (Fa; f1, f2, f3) auch außerhalb eines einzigen Zeitschlitzes (t1), gekennzeichnet durch folgende Merkmale:

- ein Codesignal innerhalb eines Ruftelegramms Fig. 3 dient zur Auswahl zweier unterschiedlicher, jeweils in einem Sendegebiet aussendbarer Sendefrequenzen, von denen die eine, nämlich die genannte Landesfrequenz (Fo), zur Aussendung nur in demjenigen Zeitschlitz vorgesehen ist, der dem jeweiligen Sendegebiet (Rufregion A) zugeordnet ist, während die andere im Bedarfsfall auch außerhalb dieses Zeitschlitzes vorgesehen ist zur Aussendung als speziell diesem Sendegebiet (Rufregion A) zugeordnete Sendefrequenz, genannt Heimatfrequenz (Fa), und zwar zur Aussendung von Funkrufen für solche Empfänger (RAa), die sich ständig nur in diesem Sendegegebiet befinden,

- die Heimatfrequenzen (Fa, Fb) einander benachbarter Sendegebiete (Rufregion A, Rufregion B) unterscheiden sich voneinander und von der Landesfrequenz (Fo).

2. Funksystem nach Anspruch 1, dadurch gekennzeichnet daß die Sendegebiete Funkverkehrsbereiche eines Funkfernsprechnetzes oder Rufregionen (A, B) sind, denen je eine Überleiteinrichtung bzw. Funkrufzentrale (Z) zugeordnet ist.

3. Funksystem nach Anspruch 1 oder 2, dadurch gekennzeichnet daß zum Aussenden der Heimatfrequenz (Fa) in einem Sendegebiet (Rufregion A) mehrere untereinander synchroniesiert arbeitende Heimatsender (SAa1, SAa2, ..., SAan) und zum Aussenden der Landesfrequenz (Fo) in den Sendegebieten (Rufregionen A, B) mehrere untereinander synchronisiert arbeitende Landessender (SAo1, SAo2, ..., SAon; SBo1, ..., SBon) vorgesehen sind, die wahrend regionenweise zugeordneter Zeitschlitze arbeiten.

4. Funksystem nach einem der Ansprüche 1 bis 3, dadurch gekennzeichnet, daß zwei Typen von Rufempfängern vorgesehen sind, nämlich ein Typ (RAa, RBb), der als fest abgestimmter Einkanalempfänger (E) ausgebildet und nur zum Empfang einer Heimatfrequenz (Fa, Fb) geeignet ist, und ein Typ (RB'o, RAo), der auch oder als fest abgestimmter Einkanalempfänger ausschließlich zum Empfang der Landesfrequenz (Fo) geeignet ist.

5. Funksystem nach Anspruch 4, dadurch gekennzeichnet daß jeweils in einem Zyklusgebiet, das aus der größten Anzahl von einander unmittelbar benachbarten und einander überlappenden Sendegebieten (A, B, C) besteht, derselbe Sendefrequenzkanal (Fo, f1) innerhalb eines Zyklus entsprechend dessen Anzahl von Zeitschlitzen mehrfach nacheinander mit denselben Funkrufen belegt wird, und zwar für jedes der Sendegebiete (A, B, C) des Zyklusgebietes einmal. 6. Funksystem nach Anspruch 5, dadurch gekennzeichnet daß innerhalb des Zyklusgebietes (A-B-C) und für die Dauer eines Zeitschlitzes jedem Sendegebiet (A) ein anderer Landesfrequenzkanal (f1, f2, f3) zugeordnet wird, und diese Zuordnung (f1 zu A) für die Dauer eines Zyklus zyklisch und im Rythmus der Zeitschlitzfolge vertauscht wird.

7. Funksystem nach Anspruch 6, dadurch gekennzeichnet daß die Sender (SA1, SB1) jeweils eine Leistungsbandbreite aufweisen, welche die Sendekanäle der zyklisch von einem Sender auszusendenden Sendefrequenzen (f1, f2, f3) umfaßt.

8. Funksystem nach Anspruch 6 oder 7, dadurch gekennzeichnet, daß für die Umschaltung der Sender auf die einzelnen Sendefrequenzen (f1, f2, f3) jeder Sender (SA1) einen Decoder (D) enthält, der im Rythmus der Zeitschlitze, der von einem Rufprozessor über die zuständige Funkrufzentrale geliefert wird, einen Senderoszillator bzw. -synthresizer auf die erforderliche Sendefrequenz umschaltet.

9. Funksystem nach einem der vorangehenden Ansprüche, dadurch gekennzeichnet, daß die Steuerung der Zeitschlitze (t1, t2, t3), die einzelnen Sendegebieten zugeordnet sind, über Zeittaktsignale erfolgt, die über Modulationsleitungen zu den einzelnen Sendern (SA1), insbesondere Landessendern (SAo1, ..., SAon) geleitet werden, und.

10. Funksystem nach einem der vorhergehenden Ansprüche, dadürch gekennzeichnet daß - zum Empfang von Funkrufen Rufempfänger vorgesehen sind, die geeignet sind, eine mit dem Funkruf übermittelte Information zur Wiedergabe auf einem Display zu speichern und dabei ein Aufmerksamkeitssignal abzugeben, und daß - zum Aussenden der in einem Funkruf enthaltenen Adresse sowie der Information und ggf. einer Sprachübertragung zum Rufempfänger ein gemeinsamer Sendefrequenzkanal vorgesehen ist.

## Claims

1. Radio system which enlarges a public telephone network by mobile receivers (RAa, RB'o) and by radio call exchanges (Z), which are each provided for a respective call region (A), wherein call orders, which come indirectly or directly from a telephone network (F), are with the aid of a radio call exchange transferable as call telegrams (fig. 3) into a radio network in order there to initiate the emission of a radio call, and wherein the same transmission frequency, called national frequency (Fo), is used for the emission of radio calls for several transmission areas which are directly adjacent and overlapping one the other, a decoupling in the mutual overlap ranges of the transmission areas however being provided thereby, that different cyclically recurring time slots (t1) are provided in the individual transmission areas for the emission of this national frequency, and wherein furthermore belonging to the different transmission frequencies (Fo, Fa; f1, f2, f3), which are each emissible in a respsetive transmission area, there are transmission frequency channels which are occupiable by radio calls and namely each by at least one (Fa; f1, f2, fe) also outside a single time slot (tl), characterised by the following features:
- a code signal within a call telegram (Fig. 3) serves for the selection of two different transmission frequencies, which are each emissible in a trespective transmission area and of which the one, namely the named national frequency (Fo), is provided for emission in only that time slot which is allocated to the respective transmission area (call region A), whilst the other is provided in case of need also outside this time slot for emission as transmission frequency, named homeland frequency (Fa), especially allocated to the transmission area (call region A) and namely for the emission of radio calls for such receivers (RAa), which are constantly disposed in only this transmission area, and - the homeland frequencies (Fa, Fb) of mutually ajdacent transmission areas (call region A, call region B) differ each from the other and from the national frequency (Fo).

2. Radio system according to claim 1, characterised thereby, that the transmission areas are radio traffic ranges of a radio telephone network or call regions (A, B), to which a repective transfer equipment or radio call exchange (Z) is allocated.

3. Radio system according to claim I or 2, characterised thereby, that several homeland transmitters (SAal, SAa2, ..., SAan), which operate one synchronised with the other, are provided for the emission of the homeland frequency (Fa) in a transmission area (call region A) and several national transmitters (SAol, SAo2,..., SAon; SBol, ..., SBon), which operate one synchronised with the other and during time slots allocated region by region, are provided for the emission of the national frequency (Fo) in the transmission arsas (call regions A, B).

4. Radio system according to one of the claims 1 to 3, characterised thereby, that two types of call receivers are provided, namely one type (RAa, RBb), which is constructed as fixedly tuned singlechannel receiver (E) and suitable only for the reception of one homeland frequency (Fa, Fb), and one type (RB'o, RAo), which is also or as fixedly tuned singlechannel receiver suitable exclusively for the reception of the national frequency (Fo).

5. Radio system according to claim 4, characterised thereby, that in a respective cycle area, which consists of the greatest number of transmission areas (A, B,C), which are directly adjacent and overlapping one the other, the same transmission frequency channel (Fo, f1 is occupied several times one after the other by the same radio calls within one cycle in accordance with its number of time slots and namely once for each of the transmission areas (A, B,C) of the cycle area.

6. Radio system according to claim 5, characterised thereby, that another national frequency channel (f1, f2, f3) is allocated to each transmission area (A) within the cycle area (A-B-C) and for the duration of a time slot and this allocation (fl to A) is transposed for the duration of a cycle cyclically and in the rhythm of the time slot sequence.

7. Radio system according to claim 6, characterised thereby, that the transmitters (SA1, BB1) each display a power bandwidth which comprises the transmission channels of the transmission frequencies (f1, f2, f3) to be emitted cyclically by a transmitter.

8. Radio system according to claim 6 or 7, characterised thersby, that for the switching-over of the transmitters to the individual transmission frequencies (f1, f2, f3), each transmitter (Sal) contains a decoder (D), which switches a transmitter oscillator or synthesiser over to the required transmission frequency in the rhythm of the time slots, which is supplied from a call processor by way of the appropriate radio call exhcange.

9. Radio system according to one of the preceding claim, characterised thereby, that the control of the time slots (t1, t2, t3), which are allocated to the individual transmission areas, takes place through time clock signals which are conducted by way of modulation lines to the individual transmitters (EA1), particularly the national transmitters (SAo1, ..., SAon).

10. Radio system according to one of the preceding claims, cheracterise thereby, that
- call receivers, which are suitable for storing an information conveyed by the radio call for reproduction on a display and in that case delivering an attention signal, are provided for the reception of radio calls and that
- a common transmission frequeney channel is provided for the emission of the address contained in a radio call as well as of the information and, in a given case, a speech transmission to the call receiver.

## Revendications

1. Système radio complétant un réseau téléphonique public par des récepteurs mobiles (RAa), RB'o) et par des stations d'appel radio (Z), dont chacune est prévue pour une région d'appel (A) et transfère des ordres d'appel, provenant directement ou indirectement d'un réseau téléphonique (F), sous forme de télégrammes d'appel (figure 3) dans un réseau radio pour y déclencher l'émission d'un appel radio, une même fréquence d'émission, la fréquence nationale (Fo) étant utilisée pour 1'émission d'appels radio dans plusieurs zones voisines et se recouvrant, mais un découplage étant prévu dans les régions de recouvrement des zones d'émission, sous forme d'intervalles de temps (t1) se répétant cycliquement dans les diverses zones d'émission pour l'émission de cette fréquence nationale, et les differences de fréquence (Fo, Fa; f1, f2, f3) à émettre chacune dans une zone appartenant à des voies à fréquence d'émission pouvant être occupées par des appels radio, une d'entre elles au moins (Fa,; f1, f2, f3) pouvant aussi se situer à l'extérieur d'un seul intervalle de temps (tl), ledit système radio étant caractérisé en ce que :
- un signal d'indicatif de zone à l'intérieur d'un télégramme d'appel (figure 3) sert à la sélection de deux fréquences différentes, pouvant être émises chacune dans une zone et dont une, la fréquence nationale (Fo) est prévue pour l'émission uniquement dans l'intervalle de temps affecté à la zone d'émission considérée (région d'appel A), tandis que la seconde est le cas échéant prévue aussi à l'extérieur de cet intervalle de temps pour l'émission d'une fréquence allouée spécialement à cette zone d'émission (région d'appel A) et appelée fréquence locale (Fa) pour l'émission d'appels radio destinés à des récepteurs (RAa) se trouvant constamment dans cette seule zone d'émission; et
- les fréquences locales (Fa, Fb) de zones d'émission voisines (région d'appel A, région d'appel B) diffèrent entre elles et de la fréquence nationale (Fo).

2. Système radio selon revendication 1, caractérisé en ce que les zones d,émission sont les régions de radiocommunication d'un réseau radiotéléphonique ou des régions d'appel (A, B) à chacune desquelles est affecté un équipement de transfert ou station d'appel radio (Z).

3. Système radio selon une des revendications 1 ou 2, caractérisé en ce que plusieurs émetteurs locaux (SAa1, SAa2, ... SAan) synchronisés sont prévus pour l'émission de la fréquence locale (Fa) dans une zone d'émission (région d'appel A) et plusieurs émetteurs nationaux (SAo1, SAo2, ... SAon; SBo1, ... SBon) synchronisés, fonctionnant pendant des intervalles de temps alloués aux régions, sont prévus pour l'émission de la fréquence nationale (Fo) dans les zones d'émission (régions d'appel A, B).

4. Système radio selon une quelconque des revendications 1 à 3, caractérisé en ce que deux types de récepteurs d'appel sont prévus, à savoir un type (RAa, RBb), réalisé sous forme d'un récepteur monovoie à accord fixe (E), destiné uniquement à la réception d'une fréquence locale (Fa, Fb), et un type (RB'o, RAo), réalisé sous forme de récepteur monovoie à accord fixe pour la réception exclusive de la fréquence nationale (Fo).

5. Système radio selon revendication 4, caractérisé en ce que dans une zone de cycle, constituée par le nombre maximal de zones d'émission voisines et se recouvrant (A, B, C), la même voie à fréquence d'émission (Fo, f1) est au cours d'un cycle occupée successivement à plusieurs reprises par les mêmes appels radio, en fonction de son nombre d'intervalles de temps, et une fois pour chacune des zones d'émission (A, B, C) de la zone de cycle.

6. Système radio selon revendication 5, caractérisé en ce qu'à l'intérieur de la zone de cycle (A-B-C) et pour la durée d'un intervalle de temps, une autre voie à fréquence nationale (f1, f2, f3) est allouée à chaque zone d'émission (A), cette allocation (f1 pour A) étant permutée cycliquement pendant la durée d'un cycle et à la cadence de la séquence des intervalles de temps.

7. Système radio selon revendication 6, caractérisé en ce que les émetteurs (SA1, SB1) présentent chacun une bande passante de puissance qui comprend les voies d'émission des fréquences (f1, f2, f3) qu'un émetteur doit émettre cycliquement.

8. Système radio selon une des revendications 6 ou 7, caractérisé en ce que pour la commutation des émetteurs aux diverses fréquences d'émission (f1, f2, f3), chaque émetteur (SA1) comprend un décodeur (D) qui commute un oscillateur ou synthétiseur d'émetteur à la fréquence d'émission requise, à la cadence des intervalles de temps qu'un processeur d'appel délivre par l'intermédiaire de la station d'appel radio correspondante.

9. Système radio selon une quelconque des revendications 1 à 8, caractérisé en ce que la commande des intervalles de temps (t1, t2, t3) affectés aux diverses zones d'émission s'effectue par des signaux de cadence temporelle, que des lignes de modulation transmettent aux divers émetteurs (SA1), et en particulier aux emetteurs nationaux (SAo1, ... SAon).

10. Système radio selon une quelconque des revendications 1 à 9, caractérisé en ce que :
- des récepteurs d'appel sont prévus pour la réception d'appels radio et peuvent mémoriser l'information transmise avec l'appel radio pour visualisation sur un écran avec délivrance d'un signal d'attention; et
- une voie à fréquence d'émission commune est prévue pour l'émission de l'adresse contenue dans un appel radio, de l'information et le cas échéant d'un message ovale au récepteur d'appel.

# FIG. 1

# FIG. 2

# FIG. 3

FIG. 4

FIG. 5

SA2, SA1, SA3, SA4, SB1, SB2, SB3
Rufregion A
Rufregion B
Überlappungs-bereich
Nahbereich
Unterzentrale
UA, UB
Rufprozessor
RP, RP
Daten-Verbindung
Fernbereich
Z
Fernsprechnetz
ZVST Region A
ZVST Region B
T

| Zeit-schlitz / Ruf-region | t1 | t2 | t3 | t1 | t2 |
|---|---|---|---|---|---|
| A | f1 | f2 | f3 | f1 | f2 |
| B | f2 | f3 | f1 | f2 | f3 |
| C | f3 | f1 | f2 | f3 | f1 |

0　　20　　40　　60　　　　　t [s]

Zyklus

## FIG. 6

T

Fernsprech-netz

RP — weitere RP

UA — weitere Unterzentralen

— weitere Sender

SA1

D → M → SV f1/f2/f3 ↑ AT

f1 f2 f3 0

E f1

E f2

E f3

## FIG. 7

# FIG.8

| V1 | P | | V2 | P | | V3 | P | | V1 | P | |

| 0 | t1 | 20s | t2 | 40s | t3 | 60s |

Zyklus

BB

U

FS1  FS2  FS3

FIG.9

f1  f2  f3  f